# EUROPEAN PATENT APPLICATION

(11) **EP 1 840 156 A1**
(43) Date of publication of application: **03.10.2007**
(21) Application number: 05809545.6
(22) Date of filing: 28.11.2005
(51) Int. Cl.: C08J 3/20, B29B 7/88, B29K 101/12, C08L 101/00

(54) **PROCESS FOR PRODUCING POLYMER COMPOSITE**

(30) Priority: 02.12.2004 JP 2004349710
(71) Applicant: Tokyo Printing Ink Mfg. Co. Ltd, Tokyo 114-0012 (JP); MITSUI & CO., LTD., Chiyoda-ku Tokyo-to 100-0004 (JP)
(72) Inventor: IMAI, Kengo c/o Tokyo Printing Ink Mfg. Co., Ltd., Kita-ku, Tokyo 1140012 (JP); KABASAWA, K. c/o Tokyo Printing Ink Mfg. Co. Ltd., Kita-ku, Tokyo 1140012 (JP)
(74) Representative: HOFFMANN EITLE
(86) International application number: PCT/JP2005/021812
(87) International publication number: WO 2006/059574

(57) **Abstract**

The disclosed is a method for manufacturing polymer composite in which a polymer as a dispersion medium and an additive to be added to the polymer is stirred for mixing in a cavity of a vessel to prepare a polymer composite in which the additive is dispersed in the polymer with a prescribed condition, wherein the stirring for mixing is performed under temperature conditions of not more than the softening temperature of the polymer until the additive is dispersed in the polymer with a prescribed condition, thereby the polymer is forced to lower the molecular weight thereof ephemerally by subjecting at least a part of chemical bonds in the polymer to cleavage, and thereafter the cleaved parts are rejoined.

## Description

### Technical field

This invention relates to a method for manufacturing polymer composite, especially, to a method for manufacturing polymer composite in which by mixing and stirring the polymer as dispersion medium and the additive agent to be added thereto in cavity of the container, a polymer composite wherein the additive agent is dispersed desirably in the polymer is obtained.

### Background art

With respect to the modification of the polymer, various techniques have been reported such as activation of the function of the polymer, chemical treatment, for instance chemical modification, and complex formation by blending the polymer with another organic compound or inorganic compound, or the like.
Among them, the complex formation by blending is that a polymer composite is prepared through a dispersion condition where a polymer as dispersion medium and an additive to be added the polymer are dispersed each other.

With respect to the polymer composite, it is desirable that the additive is dispersed uniformly in the prepared polymer composite, in order to possess the preferable inherent properties of the matrix polymer as much as possible, and to perform the modifying effect by the additive to be blended with the polymer.
Therefore, a problem to be solved is how uniformly disperses the polymer as dispersion medium and an additive to be added the polymer in order to provide a uniform dispersion.

Mechanical kneading apparatuses such as roll mill, extruder, kneader, Henschel mixer, and etc., for obtaining a dispersed state where the additive is dispersed in the polymer as dispersion medium are generally known.
These mechanical kneading apparatuses rotate impeller blades as rotary mixing stirrers with a high speed, and knead an object by utilizing clearances between the impeller blades and cavity and impact forces of the impeller blades to the polymer and/or additive.
Among them, Henschel mixer is generally known as a general purpose mixer which can provide a uniform dispersion state within a short time.
This mixer has a vertical barrel cavity, and stirs a dispersion of a polymer and an additive in the cavity with turbulent flow in order to provide a uniform dispersion of the polymer and the additive by this turbulent flow stirring.

In the following patent literatures 1-4, batch type mixers which are equipped with high-speed rotating impeller blades as rotary mixing stirrer in order to prepare a uniform dispersion of a polymer and an additive by stirring with the impeller blades is disclosed.
Further, in the following patent literatures 5 and 6, softening and melting type kneading apparatuses where a polymer as a dispersion medium is softened or melted by heating in order to prepare a uniform dispersion of the polymer and an additive.
In the following patent literature 7, the disclosed is a system where an organic pigment as an additive and a polymer is injected into disc spaces and kneaded therein in order to disperse the organic pigment into the polymer.

A method for producing a uniform dispersion is also known where an additive itself is modified by a modifier, and the modified additive is dispersed uniformly into a polymer as a dispersion medium.
With respect to the modified additive, for example, considering inorganic material, the modified inorganic material has an enhanced affinity for organic polymer as a macromolecule as compared with a pure inorganic material, and thus it would be able to provide a dispersion where the inorganic material is uniformly dispersed in the organic polymer.
As the method using such a modified dispersant, an inorganic laminar compound which has been modified organically, an inorganic laminar compound which has bee modified by swelling with an solvent, and a pigment which has been modified by dispersing into water, are disclosed in the following patent literatures 8 - 10, respectively.
In addition, silica which has a large number of silanol groups and which was obtained by a sol-gel reaction of alkoxysilane is disclosed in the following patent literatures 11 and 12.

What seeks the above mentioned kneading techniques is, for example, the technology for production of pharmaceutical drugs where the total solubility of products is improved by dissolving a pharmaceutical complex which is a dissolution resistant compound providing a pharmacologic action and which is particles in the size of approximately nano meter order into a polymer such as starch as a dispersion medium.
With respect to the technology for production of pharmaceutical drugs, in addition to the uniform dispersibility, there is a demand that the properties of the pharmaceutical complex which provide a pharmacologic action does not deteriorate in the polymer composite as compared with the properties before the dispersing procedure.
(Patent literature 1)
   Specification of US Patent No. 3266738
(Patent literature 2)
   Specification of US Patent No. 4230615
(Patent literature 3)
   JP SHO64-4892 B (1989)
(Patent literature 4)
   JP HEI10-151332 A (1998)
(Patent literature 5)
   JP 2001-105426 A
(Patent literature 6)
   JP 2001-105427 A
(Patent literature 7)
   JP 2000-167826 A
(Patent literature 8)
   JP HEI6-93133 A (1994)
(Patent literature 9)
   JP HEI9-183910 A (1997)
(Patent literature 10)
   JP SHO53-36537 A (1988)
(Patent literature 11)
   JP HEI3-212451 A (1991)
(Patent literature 12)
   JP HEI5-254819 A (1993)

### Disclosure of the invention

### Problem to be solved by the invention

However, in the mechanical kneading methods as disclosed in the above patent literatures 1-4, and 7, if not exceeding the softening temperature of the polymer as the dispersion medium, it may be difficult to obtain a uniform dispersion without deteriorating the properties. In the case of not exceeding the softening temperature, a prolonged mixing would be necessitated for attaining a desirable dispersion condition.
In such a prolonged mixing, there is a certain possibility that the structural change of the polymer and/or the additive would be induced by the impact force caused by the rotary mixing stirrer or the like, which is followed by the deterioration of the properties.
Although the Henschel mixer which causes a relatively moderate impact force can provide the additive of which properties are in less deterioration even after a prolonged mixing, it may be difficult to obtain a uniform dispersion while the deterioration of the properties by the impact force is repressed.

Then, as disclosed in the above mentioned patent literatures 5 and 6, the method where the polymer as the dispersion medium is softened or melted by heating or a frictional heat caused by stirring, and in this state of exceeding the softening temperature the polymer as the dispersion medium and an additive to be added thereto are dispersed in order to obtain a dispersion condition, that is, which does not necessitate a prolonged stirring time and can mix them within a short time is interested.
When adapting a high temperature dispersion condition exceeding the softening temperature, however, the polymer and/or additive may suffer deterioration of their properties due to the high temperature, such as the change of molecular weight, oxidation, and etc., and as a result, the obtained polymer composite may also suffer the deterioration of its properties

Then, without depending such a heating, the improvement of the uniformity of dispersion, as disclosed in the above mentioned patent literatures 8-12, where the additive is modified so as to improve the affinity for the polymer as the dispersion medium is interested.
However, when the modifying step using an additional solvent or the like is added to the process, moreover when a removing step for the solvent used for the modification is further added to the process, the dimension accuracy of article formed by the polymer composite may be degraded by the removing step for the solvent used for the modification, and the deterioration of properties of the polymer and/or additive in the polymer composite may be also induced.

When the polymer composite is prepared by the mechanical kneading, to repress the deterioration of the properties by the impact force and/or thermal effect and to optimize the uniformity of dispersion are contradictory to each other in most time but not all time. Therefore, in many cases, it may be particularly difficult to cope with both the repression of the property deterioration and the optimization of dispersion uniformity.

The present invention is made in order to solve at least one of above mentioned problems, and is able to provide a method for manufacturing a polymer composite which can perform more desirably the repression of the property deterioration and the optimization of dispersion uniformity.

### Means for solving the problems

The method for manufacturing a polymer composite according to the present invention for solving the above mentioned problems is the method for manufacturing the polymer composite wherein a polymer as a dispersion medium and an additive to be added to the polymer is stirred for mixing in a cavity of a vessel to prepare a polymer composite in which the additive is dispersed in the polymer with a prescribed condition, and which method is characterized in that the stirring for mixing is performed under temperature conditions of not more than the softening temperature of the polymer until the additive is dispersed in the polymer with a prescribed condition, thereby the polymer is forced to lower the molecular weight thereof ephemerally by subjecting at least a part of chemical bonds in the polymer to cleavage, and thereafter the cleaved parts are rejoined.

Further, the method for manufacturing polymer composite according to the present invention is characterized in that the polymer and the additive are stirred for mixing by a rotary mixing stirrer which rotates in the cavity, and the peripheral velocity at the top end of the rotary mixing stirrer is regulated within the range of not less than 20 m/sec and not more than 200 m/sec, and the flow of the polymer composite in the cavity is maintained as a laminar flow.

Furthermore, the method for manufacturing polymer composite according to the present invention is characterized in that the polymer composite is prepared within ten minutes from the starting time of the stirring for mixing.

Moreover, the method for manufacturing polymer composite according to the present invention is characterized in that the variance of the molecular weight of the polymer of before and after the mixing and stirring is within 20%.

Moreover, the method for manufacturing polymer composite according to the present invention is characterized in that substantially no structural change of the polymer is observed before and after the mixing and stirring.

In addition, the method for manufacturing polymer composite according to the present invention is characterized in that radical species are present in the polymer composite of after starting the stirring for mixing, and the radical species disappear by the time the prescribed dispersion condition is accomplished.

Further, the method for manufacturing polymer composite according to the present invention is characterized in that as the additive at least one high molecular compound selected from inorganic materials and organic materials and at least one low molecular compound selected from inorganic materials and organic materials are used.

Further, the method for manufacturing polymer composite according to the present invention is characterized in that as the additive a carbonaceous substance including at least one kind of carbon blacks, carbon nanotubes, carbon nanohorns, and fullerene is used.

Another, the method for manufacturing polymer composite according to the present invention is characterized in that the cleaved chemical bonds belong to the main chain of the polymer.

Still further, the method for manufacturing polymer composite according to the present invention is characterized in that as the cavity a barrel or cylindrical inner space is used.

Moreover, the method for manufacturing polymer composite according to the present invention is characterized in that the rotary mixing stirrer has a shape of impeller blade.

### Effect of the invention

According to the present invention, it is possible to provide a method for manufacturing a polymer composite which can perform more desirably the repression of the property deterioration and/or the optimization of dispersion uniformity.

### Brief description of drawings

(Fig. 1) is ESR spectrum for an example of the present invention.
(Fig. 1A) is a sectional view of a polymer composite manufacturing apparatus in an embodiment of the present invention.
(Fig. 1B) is another sectional view of the polymer composite manufacturing apparatus in an embodiment of the present invention.
(Fig. 2) is an infrared absorption spectrum for an example of the present invention.
(Fig. 3) is an infrared absorption spectrum for an example of the present invention.
(Fig. 4) is an infrared absorption spectrum for an example of the present invention.
(Fig. 5A) is an optical micrograph for an example of the present invention.
(Fig. 5B) is an optical micrograph for a control.

### Best Mode for carrying out the invention

Now, the method for manufacturing polymer composite according to the present invention will be described.
The embodiments shown hereafter are only a few embodiments for carrying out the present invention, and thus the present invention is not limited to the embodiments shown.

As a result of our diligent study, we, the inventors has been found a method for manufacturing polymer composite in which a polymer composite having the prescribed dispersion condition is prepared by stirring for mixing a polymer as a dispersion medium and an additive to be added to the polymer under certain conditions.
Incidentally, in these embodiments, the "polymer composite" involves all conditions that the additive is dispersively present in the polymer, regardless of their physical combining state or their chemical bonding state, excepting the case that the polymer and the additive are principally polymerized to each other.

The "certain conditions of stirring for mixing" is to perform the stirring for mixing under temperature conditions of not more than the softening temperature of the polymer, thereby the polymer is forced to lower the molecular weight thereof ephemerally by subjecting at least a part of chemical bonds in the polymer to cleavage, and thereafter the cleaved parts are rejoined.
We, the inventors has been found that such conditions are effective for the dispersion uniformity of the obtained polymer composite and for repressing deterioration of the properties of the polymer composite.

When the polymer composite is formed at a low temperature of not more than softening temperature of the polymer, it is possible to prepare a polymer composite under the temperature condition which arrests the property deterioration due to the thermal factor, and thus if shortening the stirring time, it is also possible to repress the property deterioration due to the impact force and/or friction heat, and/or to optimize the uniformity of dispersion as compared with those in the methods known in the art.

In order to attain the prescribed dispersion condition under the low temperature condition of not more than the softening temperature within a short time, to lower ephemerally the molecular weight of the polymer is adopted.
When the polymer and additive is stirred for mixing in the cavity, and the polymer runs into a certain physical impactor capable of giving a physical impact to the polymer, such as a rotary mixing stirrer which stirs and mixes the composite by rotation, at least a part of chemical bonds in at least a part of the polymer are subjected to cleavage, and thus, it is possible to lower ephemerally the molecular weight of at least a part of the polymer as compared with that of before stirring.
The low molecular weight body thus obtained can diffuse the additive more efficiently as compared with the polymer of before lowering its molecular weight alone, and it can contribute to the completion within a short time of the prescribed dispersion condition of the stirred mixture.
Because the prescribed dispersion condition can be attained in a short time, it is possible to prevent the property deterioration due to the impact force and/or friction heat which increases as the time course.
When the above mentioned chemical bond to be cleaved is of the main chain of the polymer, liability to translation motion becomes more frequently.

Then, the low molecular weight bodies which were created to prevent the property deterioration are rejoined.
Wherein, the "rejoining" denotes joining of which main part is in regard to the rejoining between the low molecular weight bodies which are ephemerally created.
Because almost all the low molecular weight bodies ephemerally created are rejoined to each other until the prescribed dispersion condition is attained, it is possible to prevent the property deterioration which is caused by such a reaction between the low molecular weight bodies ephemerally created and the additive or the like.
Whether they are rejoined can be determined from data of before and after stirring, such as ESR spectra, infrared absorption spectra, nuclear magnetic resonance spectra, and change in the molecular weight, as mentioned below.

With respect to the determination of lowering the molecular weight of polymer, and the determination of rejoining of polymers after lowering the molecular weight of polymer, it is possible to use several kinds of determination means, for example, the detection of presence or absence for appearance and disappearance of radical species using ESR spectra as shown blow, the determination of substantial identification using infrared absorption spectra or nuclear magnetic resonance spectra, and decision whether the variance in the molecular weight is within a prescribed level or not. In addition, the relaxation time of the polymer as dispersion medium, etc., is also adaptable.

With respect to the determination whether the variance in the molecular weight of the polymer material in the obtained polymer composite is within a prescribed level or not, for example, within the range of not more than 20%, it is possible to use methods of measuring the molecular weight such as gel permeation chromatography, light scattering method, centrifugal separation method, viscosity measurement method, and etc.

With respect to the determination that the structure of the polymer material in the obtained polymer composite, particularly the primary structure thereof, has not been changed substantially as compared with the polymer before stirring, infrared absorption spectra or nuclear magnetic resonance spectra or the like are used in this invention.

### «Method for manufacturing polymer composite»

To provide a method for manufacturing a polymer composite which plans the repression of the property deterioration and/or the optimization of dispersion uniformity is accomplished by the method for manufacturing the polymer composite wherein a polymer as a dispersion medium and an additive to be added to the polymer is stirred for mixing in a cavity of a vessel to prepare a polymer composite in which the additive is dispersed in the polymer with a prescribed condition, wherein the stirring for mixing is performed under temperature conditions of not more than the softening temperature of the polymer until the additive is dispersed in the polymer with a prescribed condition, thereby the polymer is forced to lower the molecular weight thereof ephemerally by subjecting at least a part of chemical bonds in the polymer to cleavage, and thereafter the cleaved parts are rejoined.

For instance, when using the respective above mentioned determination means, it is possible for a person skilled in the art to design the manufacturing method with respect to the lowering of the molecular weight of the polymer due to the cleavage of chemical bonds of at least a part of the polymer and the rejoining thereafter.

We, the inventors, have been able to find a condition that the lowering of the molecular weight of the polymer due to the cleavage of chemical bonds of at least a part of the polymer and the rejoining thereafter are liable to occur, as a result of trials for designing the polymer composite manufacturing apparatus where the lowering of the molecular weight of the polymer due to the cleavage of chemical bonds of at least a part of the polymer and the rejoining thereafter is produced, with utilizing the above mentioned determination methods and being based on a principal constitution of the polymer composite manufacturing apparatus that a rotary mixing stirrer which rotates in the cavity of a vessel to stir for mixing the polymer and the additive is equipped.

It has been found that when the peripheral velocity at the top end of the rotary mixing stirrer is regulated within the range of not less than 20 m/sec and not more than 200 m/sec, and the flow of the polymer composite in the cavity during dispersing is maintained as a laminar flow, the lowering of the molecular weight of the polymer due to the cleavage of chemical bonds of at least a part of the polymer and the rejoining thereafter are liable to occur.
Herein, the "laminar flow" is a concept of involving the case of the powder or granular materials' stirring, and when as the cavity a barrel or cylindrical inner space is used, it is defined as the state that the materials to be mixed are transferred concentrically while they are hardly transferred in the radius direction. The state can be confirmed visually.

Further, we have been also able to find that when as the cavity an inner space of vessel having a barrel or cylindrical shape is used, the lowering of the molecular weight of the polymer due to the cleavage of chemical bonds of at least a part of the polymer and the rejoining thereafter are liable to occur.

Further, we have been able to find that when the rotary mixing stirrer has a shape of impeller blade, the lowering of the molecular weight of the polymer due to the cleavage of chemical bonds of at least a part of the polymer and the rejoining thereafter are liable to occur.
The more combining the above mentioned conditions, desirably combining all the conditions, the higher the occasion possibility of the lowering of the molecular weight of the polymer due to the cleavage of chemical bonds of at least a part of the polymer and the rejoining thereafter is.

Further, with respect to the property deterioration due to the impact force and/or the heat generated by friction at the stirring, we have been able to find that when the time for attaining the prescribed dispersion condition is set to be within ten minutes from the starting time of the stirring for mixing, the deterioration is liable to be repressed.

### «Polymer composite manufacturing apparatus»

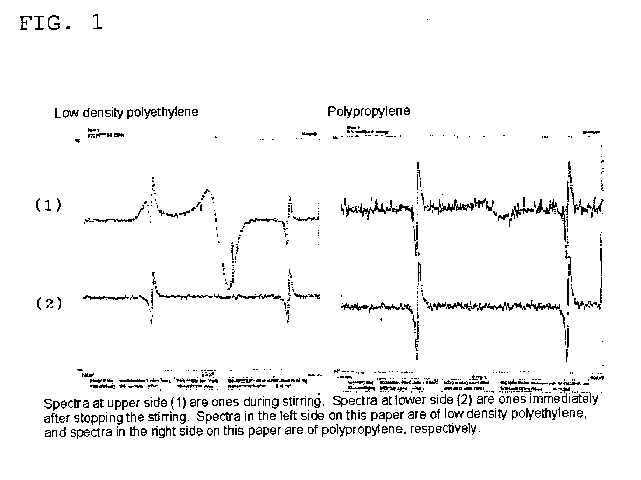

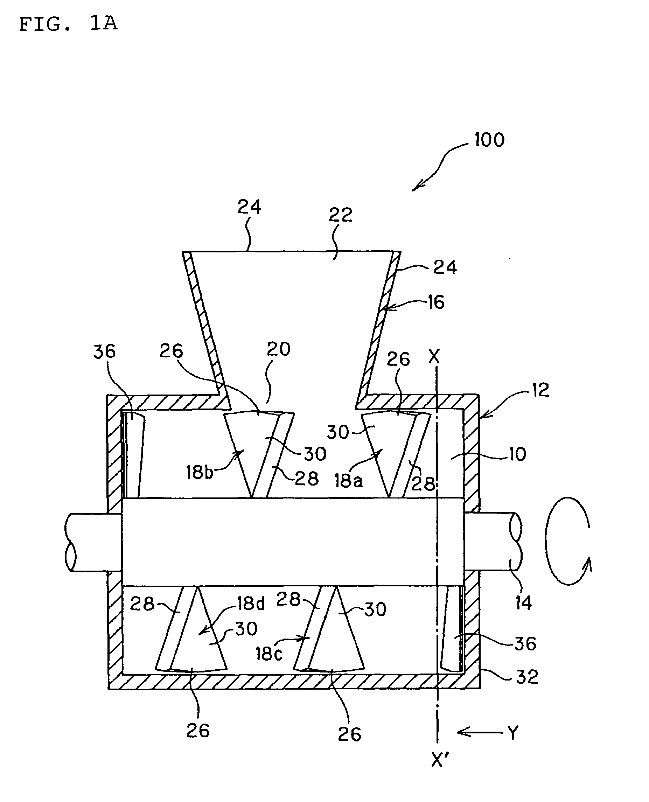

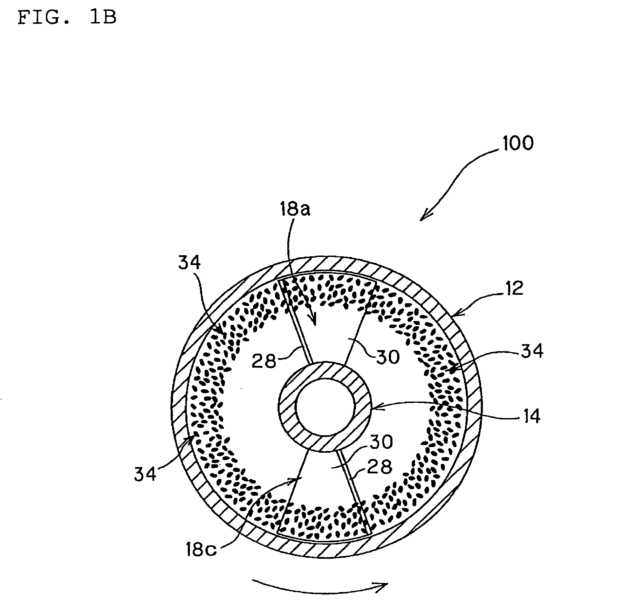

An embodiment of the polymer composite manufacturing apparatus capable of inducing the lowering of the molecular weight of the polymer due to the cleavage of chemical bonds of at least a part of the polymer and the rejoining thereafter will be illustrated hereinafter with reference to drawings.
The sectional views of the polymer composite manufacturing apparatus 100 of an embodiment according to the present invention are shown in Fig. 1A, and Fig. 1B.
Fig. 1A is a lengthwise sectional view which is obtained by assuming the lengthwise direction is the rotational axis direction of the rotation axis member 14 described later which is perpendicular to the gravity direction, and cutting off the apparatus with a plane of the gravity direction along the lengthwise direction. Fig. 1B is a crosswise sectional view which is obtained by assuming the crosswise direction is the direction perpendicular to the rotational axis direction, and cutting off the apparatus with another plane of the gravity direction along the crosswise direction, and is the crosswise sectional view along the X-X' line shown in Fig. 1A, and is the sectional view when observing from the Y orientation shown in Fig. 1A.

The polymer composite manufacturing apparatus 100 is provided with a mixing stirring chamber 12 as a vessel which comprises an inner wall member 32 which surrounds cavity 10 and the cavity 10 which is formed in inner wall member 32, to which inner cavity 10 the polymer and the additive are added, and then stirred for mixing.

In the mixing stirring chamber 12, the inner wall member 32 shows a barrel or cylindrical shape, and thus the cavity 10 which is surrounded by the inner wall member 32 is an inner space having a barrel or cylindrical shape.

The cavity 10 is the inner space having a barrel or cylindrical shape wherein the crosswise section as being a bottom face shows a perfect circularity, and the bottom face is 198 mm in diameter and the inner space is 162 mm in length.

In other words, the crosswise sections of the inner wall member 32 show a perfect circularity as with the cavity 10, and are 99 mm in radius. The thickness of inner wall member 32 is 5mm.
The inner wall member 32 is made of "DUSA-RESIST" as the raw material, and the surface facing to the cavity 10 is a smooth surface.

Into the mixing stirring chamber 12, a rotating axis member 14 which is placed at the central axis of the chamber is installed as it pierces the inner wall member in the crosswise direction.
The rotating axis member 14 has a cylindrical column shape. Although the portion of the rotating axis member 14 which locates inside the cavity 10 is thicker than the portion of the rotating axis member 14 which locates outside the cavity 10, the thickness of the rotating axis member 14 is uniform within individual portions inside and outside.
This rotating axis member 14 belongs to a rotation mechanism which is rotated counterclockwise across the crosswise direction by a rotating axis driving means which is not shown in this figure.
The diameter of the rotating axis member 14 being in the crosswise direction is 123mm, and the length of the rotating axis member 14 being in the lengthwise direction is 162mm.
The material of the rotating axis member 14 is SUS316.

Onto the rotating axis member 14, plural number of, e.g., four, rotating impeller blades 18a, 18b, 18c, and 18d are attached as rotating stirrer, by which the polymer and the additive that are added into the cavity are stirred on the rotation of the rotating axis member 14.

Each of rotating impeller blades 18a, 18b, 18c, and 18d shows a sector-like shape on the surface 30 thereof, which becomes narrow toward the rotating axis member 14.
This sector-like shape is the shape of the surface 30 itself, and more concretely, it is a quadrangle shape which may simulate a shape which is formed by combining two isosceles-triangles so as to align a side of one triangle with a side of another triangle.

The surface 30 having the sector-like shape has little area at the portion to be attached to the rotating axis member 14.
Meanwhile, the side face 28 has a certain thickness, and the thickness is even throughout the rotating impeller blade. Thus, the rotating impeller blades 18a, 18b, 18c, and 18d are attached to the rotating axis member 14 by individual contacting face to the rotating axis member 14, wherein the contacting face is a linear shape almost all of which is derived from the thickness of the side face 28
Individual area of the surface 30 and the surface opposite to the surface 30 is 500 mm², the thickness of the side face is 10 mm at the shaft side, and the top end has an incline of 2 mm.

With respect to the volume, all rotating impeller blades 18a, 18b, 18c, and 18d are the same.
In addition, with respect to the shape of the side face, area of the side face, the shape of the surface, and area of the surface, all rotating impeller blades 18a, 18b, 18c, and 18d are the same.
As for the material that composes the rotating impeller blades 18a, 18b, 18c, and 18d, stainless steel (Stellite flame spray coated) and etc., are enumerated.
All the surface 30, the surface opposite to the surface 30, and side faces are smooth faces.

Any two or more of the rotating impeller blades 18a, 18b, 18c, and 18d are not located at a corresponding position in the lengthwise direction, that is, there is a location relationship that they are displaced mutually.
The rotating impeller blades 18a, 18b, 18c, and 18d are equally displaced mutually, and the displacing distance of from one impeller blade to the adjacent impeller blade is set to be 65 mm.

Namely, the relative location relationships of the individual rotating impeller blades 18a, 18b, 18c, and 18d to the rotating axis member 14 to be attached in the lengthwise direction differ with respect to each other.
Any two or more of the rotating impeller blades 18a, 18b, 18c, and 18d are not located at a corresponding position in the lengthwise direction.
The rotating impeller blades 18a, 18b, 18c, and 18d are equally spaced by a common displacing distance of from one impeller blade to the adjacent impeller blade.

The relative location relationship of the rotating impeller blade 18a or 18b to the rotating axis member 14 to be attached in the crosswise direction is 180 degrees opposite to the relative location relationship of the rotating impeller blade 18c or 18d to the rotating axis member 14 to be attached. The impeller blades 18a and 18b are located in the same orientation, and the locations of the impeller blades 18c and 18d are diametrically opposite to the locations of the impeller blades 18a and 18b.
Within each combination, the impeller blades which are located in the same orientation mutually are arranged at approximately corresponding sites.

The attachment angles of the rotating impeller blades 18a, 18b, 18c, and 18d to the rotating axis member 14 are inclined from both the lengthwise direction and the crosswise direction. Between the rotating impeller blades 18a and 18b which are located in the same orientation, the attachment angles to the rotating axis member 14 agree. Similarly, between the rotating impeller blades 18c and 18d, the attachment angles to the rotating axis member 14 agree. Between the rotating impeller blades which are diametrically opposite to each other, the attachment angles are deviated by 90 degrees from each other.

Each rotating impeller blade 18a, 18b, 18c, 18d provides a gap between its top end 26 and the inner wall member 32, wherein the top end 26 is the nearest position of the impeller blade to the inner wall member 32.
With respect to all the rotating impeller blade 18a, 18b, 18c, and 18d, the gap is 1 mm.
Even under the rotating state, the magnitude of the gap is kept constant.
Incidentally, in Fig. 1A, a scraper blade 36 is arranged along the bottom face of the cavity 10.
The scraper blade 36 is a kind of the rotating impeller blades, and which functions so as to scrape the material which exists around the end portion of the chamber inwardly.

When rotating the rotating axis member 14, the polymer and additive 34 which are added into the cavity are stirred vertically in the gravity direction by the rotating impeller blade 18a, 18b, 18c, and 18d (Fig. 1A).
This vertical stirring is performed in a laminar flow state where concentric stirring under laminar flow is done (Fig. 1B).
In Fig. 1B, the polymer and additive 34 are stirred under laminar flow along the circumference of the cavity so as to form a perfect circular shape.

The mixing stirring chamber 12 is equipped with a hopper 12 which is provided on the side wall of the chamber, which is vertical to the rotating axis direction of the rotating axis member 14, and through which the polymer and/or additive are added to the cavity 10.

The hopper 16 is composed of a hopper wall member 24 which is a wall member showing a conical shape and a hopper through-hole 22 which is given by the hopper wall member 24.

The hopper through-hole 22 is a through-hole having a conical shape which becomes narrower toward the wall penetrating hole 20 from the hopper intake opening 24.

The wall penetrating hole 20 penetrates the side wall of the mixing stirring chamber 12 at a site of being positioned in opposite to the gravity direction.
By connecting the hopper wall member 24 around the wall penetrating hole 20, the hopper 16 is attached to the mixing stirring chamber 12.

The polymer and/or the additive are thrown into the hopper intake opening 24 from outside.
The polymer and/or the additive thus thrown pass through the hopper through-hole 22, and are finally added to the cavity 10 through the wall penetrating hole 20.

Next, a method for forming polymer composite by stirring for mixing a polymer as dispersion medium and an additive to be added to the polymer with the above mentioned polymer composite manufacturing apparatus will be explained.

Polymer and an additive 34 are thrown into the hopper intake opening 24 in order to add them inside the cavity 10.
After the addition, the rotating axis member 14 runs, while adjusting the temperature so as not to be more than the softening temperature of the polymer.
The rotation peripheral velocity of the rotating axis member 14 is regulated so as to obtain a peripheral velocity at the top end of the rotating impeller blades 18a, 18b, 18c, 18d of being within the range of not less than 20 m/sec and not more than 200 m/sec, and to form a laminar flow as shown in Fig.1B.
After the prescribed dispersion condition is attained, the polymer composite may be taken out.

As demonstrated in the following Examples, the above described apparatus is a polymer composite manufacturing apparatus which is able to prepare the polymer composite wherein the polymer is forced to lower the molecular weight thereof ephemerally by subjecting at least a part of chemical bonds in the polymer to cleavage, and thereafter the cleaved parts are rejoined, with the operation of rotation stirring by the rotary mixing stirrers having the shape of impeller blade in the cavity which is the inner space having the barrel or cylindrical shape, wherein the peripheral velocity at the top end of the rotating impeller blades, the top end facing the inner surface of the cavity, is regulated within the range of not less than 20 m/sec and not more than 200 m/sec.
By applying this apparatus, a polymer composite manufacturing apparatus, which is able to practice the condition that the polymer is forced to lower the molecular weight thereof ephemerally by subjecting at least a part of chemical bonds in the polymer to cleavage, and thereafter the cleaved parts are rejoined, and thus which is able to perform more desirably the repression of the property deterioration and/or the optimization of dispersion uniformity, can be offered.

If the peripheral velocity at the top end of the rotary mixing stirrer is exceeds 200 m/sec, there is a fear that the polymer deteriorates thermally, because the heat generation due to friction becomes harder.
The thermal deterioration would bring the degression in the rejoining capability of the cleaved parts, wherein the cleaved parts have been ephemerally created by cutting the polymer into them with the impeller blades so as to lower the molecular weight.
Under normal conditions, the cleaved parts of the polymer would be rejoined as the energy of stirring becomes weaker. However, since the thermal deterioration tends to prevent the joining of the molecular weight lowered polymers, the frequency of the cases that the molecular weight lowered polymers can not join with each other becomes larger. Then, the molecular weight lowered polymers which are incapable of joining with each other would attack the polymer and/or the additive so as to link with them, with the result that the obtained polymer composite may suffer deterioration in their properties.
If the peripheral velocity at the top end of the rotary mixing stirrer is less than 20 m/sec, there is a fear that the dispersion ends in failure, as the additive can hardly diffuse uniformly and minutely, because the stirring under laminar flow can not be performed, and the impact energy can not be transmitted sufficiently to the polymer, and thus the ephemerally lowering of the molecular weight of the polymer can not be induced.

The condition of stirring for mixing is under the laminar flow state.
When being in the laminar flow, it is possible to utilize the shearing force due to the impact by the rotating impeller blades efficiently as compared with that in the case of being in a turbulent flow, and thus it is advantageous for generating the molecular weight lowered polymer.
Further, since the shearing force can be utilized efficiently, it is possible to minimize the peripheral velocity of the impeller blades, with the result that the deterioration of properties by the frictional heat, etc., can be inhibited.
The laminar flow where the concentric stirring under laminar flow is done can be visually identified by any persons skilled in the art.

Although the stirring time to be needed depends on the kinds of polymer and/or additive to be used, it is preferable to bring the dispersion to a certain level within about ten minutes regardless of the low or high of the softening temperature, for example, involving both low molecular weight polyethylene and polysulfone between which there is a far difference in the softening temperature.
When stirring more than such a time, the polymer composite, the polymer and the additive may fall into deterioration.
In addition, because of the degression of the manufacturing efficiency, it is not preferable to stir more than such a time in many cases.

As the kind of the polymer to be used for preparing the polymer composite, there is not a particular limitation. However, in order to proceed more efficiently this embodiment, it is preferable that the glass transition temperature of polymer is not less than -50°C. For example, polypropylene, polyethylene, polyester, polycarbonate, polymethyl methacrylate, polystyrene, nylon, polysulfone, polyether ether ketone, polyoxymethylene, polyimide, polyurethane, polysaccharide, starch, poly (N-vinyl pyrrolidone), and copolymers thereof, etc., can be enumerated typically.
With respect to the method in the prior art, there is a restriction that the polymer having a high softening temperature such as polysulfone or polyimide is hardly used for the mechanical preparation of the composite because of the necessity for softening and melting the polymer, while the method according to the present invention does not encounter such a restriction.
This invention is also suitable for polyurethane which is liable to depolymerization by heating.

Furthermore, a high hydrogen bonding polymer which satisfy the percentage by weight of the hydrogen bonding group or ionic group per unit weight of the polymer is in the range of 20 % - 60 % can be enumerated as a concrete example.
As the hydrogen bonding group of the high hydrogen bonding polymer, hydroxyl group, amino group, thiol group, carboxyl group, sulfonic acid group, phosphoric acid group, and etc., may be enumerated. As the ionic group, carboxylate group, sulfonic ion group, phosphoric ion group, ammonium group, phosphonium group and etc., may be enumerated.
Among the above hydrogen bonding groups and ionic groups of the , hydroxyl group, amino group, carboxyl group, sulfonic acid group, carboxylate group, sulfonic ion group, and ammonium group, and etc., are enumerated as more preferable ones.
As concrete examples, polyvinyl alcohol; vinyl ethylene - vinyl alcohol copolymer having a vinyl alcohol moiety of not less than 41 mol%; hydroxymethyl cellulose; hydroxyethyl cellulose; carboxymethyl cellulose; hydroxypropyl cellulose; hydroxypropyl methyl cellulose; polysaccharides such as amylose, amylopectin, pullulan, curdlan, xanthan, chitin, chitosan, cellulose, pullulan and chitosan; polyacrylic acid; sodium polyacrylate; polybenzene, sulfonic acid; sodium polybenzene sulfonate; polyethylene imine; polyacryl amine and ammonium salt thereof; polyvinyl thiol; polyglycerine; etc., are enumerated.

Moreover, polysaccharides can be mentioned as concrete examples of the polymer and/or the additive.
They are biological macromolecules synthesized by condensation polymerization of various monosaccharides in the living body system, and chemically modified bodies derived from them are also involved.
For instance, cellulose and cellulose derivatives such as hydroxymethyl cellulose, the hydroxyethyl celluloses, and carboxymethyl cellulose, hydroxypropyl cellulose; amylose; amylopectin; pullulan; curdlan; xanthan; chitin; chitosan and etc., are enumerated.

As the additive to be added to the polymer as the dispersion medium, polymers, inorganic materials, and low molecular organic compounds may be involved.
Although any material among them can be used, an additive which has a small bulk specific gravity as compared with the polymer as the dispersion medium may be adoptable, for example carbonaceous material including at least one of carbon blacks, carbon nanotubes, carbon nanohorns, and fullerenes may be usable.
As the polymer, at least one kinds of above mentioned ones, as well as at least one of polymer liquid crystals, polymer drugs, DNAs, and proteins may be usable.
As the inorganic materials, for instance, lamellar clay minerals, carbons (graphites, carbon nanotubes, carbon nanohorns, fullerenes, etc.), inorganic pigments are enumerated. As the shape thereof it is more preferable not to be a large lump which may interrupt the stirring, and any one of fibrous shapes, globular particles, scaly shapes and the like may be usable.
When there is a great difference in the bulk specific gravity, such as that between a polymer and carbon nanotube, a uniform dispersion would be hardly obtained by a conventional kneading machine such as roll mill or extruder regardless of conditions.
On the contrary, in this invention, it is possible to accomplish a uniform dispersion with good reproducibility and stability, and thus possible to obtain a polymer composite having a uniform dispersibility.
As the low molecular organic compounds, pigments or dyes such as phthalocyanine type, azo type, anthraquinone type, quinacridon type, or perylene type; plasticizers such as long-chained esters; mold releasing agents such as phosphoric esters; antioxidants; ultraviolet absorbing agents; drugs; amino acids; DNAs and proteins and fragments thereof; and etc. are enumerated. They may be in solid form or nonvolatile liquid form.
Although in this embodiment it is not particularly necessitated to add any surfactant or lubricant which may function for improving the dispersibility, it is possible to use them optionally.

Inorganic lamellar compounds which are capable of swelling and cleaving in a solvent may be usable.
Among them, clay minerals having swelling property are preferable. The clay minerals can be classified into two types, i.e., the two layered structure type wherein an octahedral layer the central metal of which is aluminum, magnesium or the like is layered on a tetrahedral layer of silica, and the three layered structure type wherein a tetrahedral layer of silica is sandwiched between two octahedral layers the individual central metal of which is aluminum, magnesium or the like.
As the former type, kaolinite group, antigorite group and etc., can be enumerated, and as for the latter type, depending on the number of interlayered cation, smectite group, vermiculite group, mica group, and etc., can be enumerated.
Concretely, kaolinite, dickite, nakhlite, halloysite, antigorite, chrysotile, pyrophyllite, montmorillonite, hectorite, tetrasililic mica, sodium tainiolite, muscovite, margarit, talc, vermiculite, phlogopite, xanthophyllite, chlorite, and etc., can be enumerated.
These inorganic lamellar compounds may be swelled.
Although the solvent to be used for swelling is not particularly limited, for instance, as for the natural clay mineral capable of swelling, water; alcohols such as methanol, ethanol, propanol, isopropanol, ethylene glycols, diethylene glycols, etc.; dimethyl formamide; dimethyl sulfoxide, acetone, and the like are enumerated. Among them, water and alcohols such as methanol are preferable.

Although the ratio when mixing the polymer and the additive may vary depending on the properties of the composite material to be obtained, it is desirable that the additive may be an amount of not more than 85 % of the total weight, and more preferably, not more than 20 % of the total weight. As demonstrated in Table 2 of the following Examples, however, to vary the weight part of the additive does hardly become a characteristic factor, and inmany cases, the characteristic factors for the condition of rejoining of cleaved parts of polymer after the polymer is forced to lower the molecular weight thereof ephemerally by subjecting at least a part of chemical bonds in the polymer are constituted by conditions such as the rotation peripheral velocity and the laminar flow state, etc.

A polymer composite which is obtained by the manufacturing method according to the embodiment of this invention shows a uniform and minute dispersion as compared with those obtained by any known mixing technique.
When the polymer composite shows such a state, it is likely to excel in the transparency due to the improvement of the dispersion uniformity.
Moreover, it would be expected that the mechanical properties, such as elasticity etc., of the polymer composite are improved due to the improvement of the dispersion uniformity.

Furthermore, with respect to the polymer composite which is composed of a crystalline polymer such as polypropylene, polyethylene, or the like, and a nucleus forming agent in accordance with the embodiments of this invention, it would be expected that the crystallization initiating temperature become 2 - 15 °C higher than those of the polymer composites manufactured by the methods known in the art due to the improvement of the dispersion uniformity, and which contributes to the shortening of molding cycle.

### Examples

The present invention will be illustrated more concretely by examples, although the present invention is never limited to these examples.

### «Means for determination of the rejoining condition after the polymer is forced to lower the molecular weight thereof by subjecting at least a part of chemical bonds in the polymer»

In order to design the apparatus capable of providing the rejoining condition after the polymer is forced to lower the molecular weight thereof by subjecting at least a part of chemical bonds in the polymer, the determinations whether the desired condition can be obtained or not had been performed for apparatuses built as trials by the following ESR (Electron Spin Resonance)analysis,GPC(GelPermeation Chromatography) analysis, and IR (infrared absorption spectrum) analysis, and then the apparatus of the above mentioned embodiment was designed.

### <Detection of radical by ESR >

Two samples, i.e., a sample of during stirring and a sample immediately after stopping the stirring, on a preparation of the polymer composite, were immersed into liquid nitrogen. After an adequate cooling, the samples were encapsulated in a respective sample tube. Then, the measurements were practiced by using the ESA, FA200, manufactured by Japan Electron Optics Laboratory Ltd., and under conditions of: temperature of 77K, sweep magnetic field of 320 ±7.5 mT, magnetic field modulation frequency of 100 kHz, magnetic field modulation width of 0.2 mT, time constant of 0. 1, microwave power of 1 mW, and two spectra thus obtained for the sample of during stirring and the sample immediately after stopping the stirring were compared with each other.

### <Detection of molecular weight change by GPC >

Two samples, i.e., a sample of polymer before stirring, and a sample of polymer in the polymer composite after stirring were prepared in individual 0.02 wt% solution. Then, the measurements were practiced by using a GPC device, model SSC-7100, manufactured by Senshu Scientific Co., Ltd. which was equipped with a column manufactured by TOSHO, model TSK-GEL GMHHR-H (S) H, and a RI detector, and under conditions of: flow rate of 1mL/min, and temperature of 140 °C

The obtained chromatograms were converted to those of the standard polystyrene in order to determine the number average molecular weight (Mn) and the weight average molecular weight (Mw) for both the polymer before stirring and the polymer in the polymer composite after stirring, and to compare them.

### <Detection of structural change by infrared spectrum>

With respect to two samples, i.e. , the polymer before stirring and the polymer in the polymer composite after stirring, the determinations were practiced in accordance with the Spectrum One method and by using a FT-IR spectrophotometer manufactured by Perkin Elmer, and two spectra thus obtained for the sample of during stirring and the sample immediately after stopping the stirring were compared with each other.

### «Evaluation of the dispersion uniformity and of the repression effect for property deterioration»

### <Transparency >

Samples of 1 mm in thickness of manufactured polymer composites were subjected to a determination using a direct-reading haze meter manufactured by Toyo Seiki Seisaku-sho, Ltd. in accordance with JIS-K-7136-1, and the transparency of the polymer composites were evaluated by the obtained haze values.

### <Storage modulus>

Samples of 0.5 mm in thickness of manufactured polymer composites were subjected to a determination using DMA-7 manufactured by Perkin-Elmer in accordance with the tension test in JIS-K-7244-4, and the storage modulus values thereof were calculated.

### <Surface electric conductivity>

Using MCP-T600 manufactured by Mitsubishi Chemical Corp., and in accordance with the four probes method, this property was determined.

### <Evaluations of dispersion uniformity, etc., using photograph>

These evaluations were practiced by taking optical photomicrographs with 40 magnifications.

Even with the above mentioned detection of molecular weight change by GPC, or the above mentioned detection of structural change by infrared spectrum, the evaluation of repression effect for property deterioration can be performed as no change of each parameter is observed between before and after the stirring.

### «Manufacturing method and Considerations»

### «Example 1»

### <Manufacturing method>

100 parts of a low density polyethylene (manufactured by Ube Polyethylene Co., Ltd., F522N, pellets of 3 mm in diameter) having a MFR value (melt mass flow rate) of 5 g/10 minutes (in accordance with JIS-K-7210), and a softening temperature of 100.2 °C, and 5 parts of no organification treatment received montmorillonite (manufactured by Sud Chemie: OPTIGEL CL) having a mean diameter of 7.4 µm were added to the polymer composite manufacturing apparatus of the above mentioned embodiment as the mixer, which is illustrated in Fig. 1A and Fig. 1B, from the hopper intake opening thereof, and stirred at a top end's peripheral velocity of 21 m/sec for 5 minutes at room temperature, in order to prepare a polymer composite being of low density polyethylene (LDPE)-montmorillonite (MMT) composite.

### <Observation of the rejoining condition after the polymer was forced to lower the molecular weight thereof by subjecting at least a part of chemical bonds in the polymer>

From the ESR spectra of these stirred materials shown in Fig. 1, the cleavage and rejoining of the main chain of the polymer were confirmed, because of the presence and absence of radical species in that during the stirring and that immediately after stopping the stirring, respectively.
Namely, since the absorption spectrum owing to the radical species was observed during the stirring, it was understood that the main chain of the polymer was cleaved and thus the molecular weight lowered polymers were temporarily produced. And, since the absorption spectrum owing to the radical species disappeared immediately after stopping the stirring, it was understood that almost all the temporarily produced molecular weight lowered polymers had been rejoined.

Table 1 shows the molecular weight change of the polymer (the number average molecular weight: Mn, and the weight average molecular weight: Mw) before and after the stirring by the GPC analysis of the materials to be stirred.
From this analysis, it was found that variance of the molecular weight was within 20%, and thus it was understood that the molecular weight was hardly changed by this mixing. Therefore, it was understood that almost all the temporarily produced molecular weight lowered polymers had been rejoined.

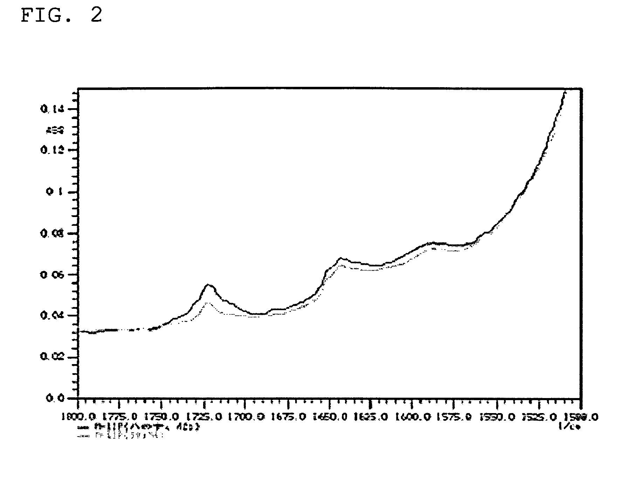

As for the infrared rays spectra shown in Fig. 2, the absorption peaks of before and after stirrings were in close agreement with each other, and thus, it was confirmed that no structural change of the polymer were occurred between before and after the stirring.

As mentioned above, from Fig. 1 and Fig. 2 and Table 1, it can be confirmed that at least a part of chemical bonds in the polymer was cleaved so as to lower the molecular weight of the polymer and thereafter the cleaved ones were rejoined, and thus, it was able to be judged that the polymer composite manufacturing apparatus according to this Example and this embodiment was a polymer composite manufacturing apparatus capable of providing the rejoining condition after the polymer was forced to lower the molecular weight thereof by subjecting at least a part of chemical bonds in the polymer.

**(Table 1)**

| Molecular weight changes | | | | |
|---|---|---|---|---|
| Polymer | Mn before stirring | Mn after stirring | Mw before stirring | Mw after stirring |
| Low density polyethylene | 36428 | 35576 | 561054 | 561737 |
| Polypropylene | 73312 | 70473 | 357520 | 388892 |
| Polycarbonate | 17761 | 19152 | 47766 | 51477 |

### <Evaluation of dispersion uniformity and of repression effect for property deterioration >

The data of physical properties where the dispersion uniformity in the polymer composite that had obtained in this Example 1 was suggested were summarized in Table 2.
As compared with the pure low density polyethylene having a haze value of 92.8, storage moduli of 0.27 GPa (at 30 °C) and 0.15 (at 50 °C), this polymer composite showed a low turbidity and thus a good transparency, and further showed enhanced elastic moduli. Therefore, it was understood that the additive had dispersed in the polymer with extreme uniformity and finely. Further, since the elastic moduli were enhanced, it was understood that the deterioration of the polymer properties were not caused.
From the physical properties' data shown in Table 2, It is understood that this apparatus is a manufacturing apparatus that can give the uniform dispersibility and the repressing effect for property deterioration to the manufactured polymer composite.
As described above, since it is certain that the manufacturing apparatus of this Example can provide the rejoining condition after the polymer was forced to lower the molecular weight thereof by subjecting at least a part of chemical bonds in the polymer, it is understood that this manufacturing apparatus can give the uniform dispersibility to the manufactured polymer composite by organizing the condition.
In this Example, it was found that, at the room temperature as a low temperature, and with 5 minutes as a shortened time, the no organification treatment received montmorillonite as an unmodified inorganic material can be dispersed uniformly in the low density polyethylene as a polymer.

### «Example 2»

### <Manufacturing method>

100 parts of a polypropylene (manufactured by Idemitsu Petrochemical Co. , Ltd. , J2000GP, pellets of 3 mm in diameter) having a MFR value of 20 g/10 minutes, and a softening temperature of 159.9 °C, and 5 parts of no organification treatment received montmorillonite (manufactured by Sud Chemie: OPTIGEL CL) having a mean diameter of 11.7 µm were stirred at a top end's peripheral velocity of 105 m/sec for 5 minutes at roomtemperature by using the same mixing apparatus used in Example 1, in order to prepare a polymer composite being of polypropylene(PP)-montmorillonite (MMT) composite.

### <Observation of the rejoining condition after the polymer was forced to lower the molecular weight thereof by subjecting at least a part of chemical bonds in the polymer>

From the ESR spectra of these stirred materials shown in Fig. 1, the cleavage and rejoining of the main chain of the polymer were confirmed, because of the presence and absence of radical species in that during the stirring and that immediately after stopping the stirring, respectively.
Namely, since the absorption spectrum owing to the radical species was observed during the stirring, it was understood that the main chain of the polymer was cleaved and thus the molecular weight lowered polymers were temporarily produced. And, since the absorption spectrum owing to the radical species disappeared immediately after stopping the stirring, it was understood that almost all the temporarily produced molecular weight lowered polymers had been rejoined.

Table 1 shows the molecular weight change of the polymer (the number average molecular weight: Mn, and the weight average molecular weight: Mw) before and after the stirring of the materials to be stirred.
From this analysis, it was found that variance of the molecular weight was within 20%, and thus it was understood that the molecular weight was hardly changed by this mixing. Therefore, it was understood that almost all the temporarily produced molecular weight lowered polymers had been rejoined.

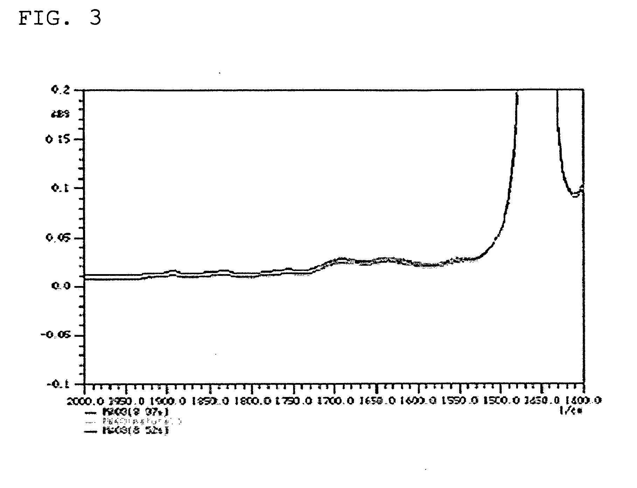

As for the infrared rays spectra shown in Fig. 3, the absorption peaks of before and after stirrings were in close agreement with each other, and thus, it was confirmed that no structural change of the polymer were occurred between before and after the stirring.

### <Evaluation of dispersion uniformity and of repression effect for property deterioration >

The data of physical properties' data where the dispersion uniformity in the polymer composite that had obtained in this Example 2 was suggested were summarized in Table 2.

**(Table 2)**

| Properties of Polymer Composites | | | | | | | | |
|---|---|---|---|---|---|---|---|---|
| | Composition (parts by weight) | Stirring time (minute) | Peripheral velocity (m/sec) | Stirring temperature | Stirring State | Haze value | Storage Modulus (GPa) | |
| | | | | | | | 30°C | 50°C |
| Ex. 1 | LDPE/MMT (100/5) | 5 | 21 | Room temperature | Laminar flow | 69.6 | 0.32 | 0.19 |
| Ex. 2 | PP/MMT (100/5) | 5 | 105 | Room temperature | Laminar flow | 84.2 | 1.41 | 1.15 |
| Ex. 3 | LDPE/MMT (90/10) | 7 | 105 | Room temperature | Laminar flow | 67.8 | 0.36 | 0.21 |
| Ex. 4 | LDPE/MMT (80/20) | 9 | 124 | Room temperature | Laminar flow | 59.8 | 0.39 | 0.22 |
| Ex. 5 | LDPE/MMT (70/30) | 4 | 195 | Room temperature | Laminar flow | 81.1 | 0.38 | 0.25 |
| Ex. 6 | LDPE/mica (100/5) | 2 | 64 | Room temperature | Laminar flow | 54.5 | 0.27 | 0.15 |
| Ctrl. 1 | LDPE/MMT (100/5) | 1 | 210 | 130°C | Turbulent flow | 66.4 | 0.14 | 0.06 |
| Ctrl. 2 | PP/MMT (100/5) | 6 | 52 | 160°C | Turbulent flow | 92.4 | 1.12 | 0.83 |
| Ctrl. 3 | PP/MMT (80/20) | 15 | 210 | 80°C | Turbulent flow | 90.7 | 0.56 | 0.44 |

Ellipsis LDPE: Low density polyethylene, MMT: no organization treatment received montmorillonite, PP: polypropylene

As compared with the pure polypropylene having a haze value of 86.8, storage moduli of 1.01 GPa (at 30 °C) and 0.82 (at 50 °C), this polymer composite showed a low turbidity and thus a good transparency, and further showed enhanced elastic moduli. Therefore, it was understood that the additive had dispersed in the polymer with extreme uniformity and finely. Further, since the elastic moduli were enhanced, it was understood that the deterioration of the polymer properties were not caused.
As described above, since it is certain that the manufacturing apparatus of this Example can provide the rejoining condition after the polymer was forced to lower the molecular weight thereof by subjecting at least a part of chemical bonds in the polymer, it is understood that this manufacturing apparatus can give the uniform dispersibility to the manufactured polymer composite by organizing the condition.
In this Example, it was found that, at the room temperature as a low temperature, and with 5 minutes as a shortened time, the no organification treatment received montmorillonite as an unmodified inorganic material can be dispersed uniformly in the polypropylene as a polymer.

### «Examples 3 - 6»

### <Manufacturing method>

As shown in Table 2, polymer composites being of low density polyethylene - montmorillonite were obtained by using the same mixing apparatus and the same manner for stirring used in Example 1, except that the ratio of low density polyethylene and montmorillonite by weight part, the stirring time, and the peripheral velocity were varied.

### <Evaluation of dispersion uniformity and of repression effect for property deterioration >

Since this polymer composite showed a low turbidity and enhanced elastic moduli, it was understood that the no organification treatment received montmorillonite had dispersed in the polymer with extreme uniformity and finely. Further, it was also understood that the dispersion uniformity can be ensured regardless of variations in the ratio of low density polyethylene and montmorillonite by weight part, the stirring time, and the peripheral velocity within certain ranges.

### «Control 1»

### <Manufacturing method>

A polymer composite being of low density polyethylene - montmorillonite was obtained in accordance with the same procedure used in Example 1, except that the parameters shown in Table 2 were varied. The stirring time was shortened to 1 minute, the stirring was performed at the peripheral velocity of 210 m/sec, and it was the turbulent flow stirring, and the stirred materials were heated to 130 °C which was a temperature higher than the softening temperature of the LDPE, and under thus condition the polymer composite was prepared.

### <Evaluation of dispersion uniformity and of repression effect for property deterioration >

Since the obtained polymer composite showed a haze value of 66.4 and thus it was relatively transparent, it could be considered that a certain level of dispersion uniformity was attained. However, the elastic moduli were remarkably degraded as compared with those of the pure LDPE. Thus, it was found that although a certain level of dispersion uniformity was attained by a shortened time stirring, the deterioration of properties of the polymer in the polymer composite became terribly, to which the deterioration by the impact force caused by the impeller blades and the thermal deterioration by temperature rising due to the friction heat would contribute.

### «Control 2»

### <Manufacturing method>

A polymer composite being of polypropylene - montmorillonite was obtained in accordance with the same procedure used in Example 1, except that the parameters shown in Table 2 were varied. Although the stirring time and the peripheral velocity were similar to those in Example, the heating temperature was set to 160 °C, which was higher than the softening temperature of the PP and also than the melting temperature of the PP, by using an external heating device. When heating externally to a temperature higher than the melting point, even in such a peripheral velocity, the stirring came to turbulent flow stirring because of increased flowability.

### <Evaluation of dispersion uniformity and of repression effect for property deterioration >

Since the obtained polymer composite showed an increased haze value and thus the transparency thereof was degraded, it was found that the dispersion uniformity can not be attained. On a visual observation, it was found that the failure of the uniform dispersion was owing to the uneven dispersion of huge particles. With respect to the elastic moduli, the improvement in the obtained polymer composite was not realized as compared with that in Example 2, although the elastic moduli of the obtained polymer composite were slightly higher than those of the pure PP due to the complex effect of additive. Thus, it was considered that the improvement effect for the elasticmoduli due to the dispersion uniformity could not be expected, and the property deterioration to which thermal deterioration of the polymer under high temperature contributed would occur.

### «Control 3»

### <Manufacturing method>

A polymer composite being of polypropylene - montmorillonite was obtained in accordance with the same procedure used in Example 1, except that the parameters shown in Table 2 were varied. Although the stirring temperature was not more than the softening temperature of the polypropylene, for a long time, the stirring was performed at the same peripheral velocity used in Control 1 as a high speed.

### <Evaluation of dispersion uniformity and of repression effect for property deterioration >

Although the temperature to be used was not more than the softening temperature, the haze value was increased and thus the transparency was degraded. It was found that the dispersion uniformity can not be attained.
Since the elastic moduli of the obtained polymer composite became inferior, it was considered that the improvement effect for the elasticmoduli due to the dispersion uniformity could not be expected, and the property deterioration to which thermal deterioration of the polymer under high temperature contributed would occur.

### «Example 7»

### <Manufacturing method>

100 parts of a low density polyethylene (manufactured by Ube Polyethylene Co., Ltd., F522N, pellets of 3 mm in diameter) having a MFR value (melt mass flow rate) of 5 g/10 minutes (in accordance with JIS-K-7210), and a softening temperature of 100.2 °C (in accordance with JIS-K-7206), and 45 parts of phthalocyanine blue (C. I. Pigment Blue 15:1) pigment were added to the mixer in Example 1 from the hopper intake opening thereof, and stirred at a top end's peripheral velocity of 26 m/sec for 7 minutes at room temperature, in order to prepare a polymer composite being of low density polyethylene pellet - phthalocyanine blue pigment composite.

### <Evaluation of dispersion uniformity>

The dispersion uniformity of the coloring agent for polyethylene type resin as the additive in the low density polyethylene pellet - phthalocyanine blue pigment composite was determined by the number of grits and the pressure rising test as described blow.
From the results shown in Table 3 in comparison with Controls 4 and 5 as described later and referring to the evaluation criteria of the grits, it was found that when the peripheral velocity is in the range of 20 m/sec - 200 m/sec and the laminar flow could be formed, it is easy to provide the rejoining condition after the polymer was forced to lower the molecular weight thereof by subjecting at least a part of chemical bonds in the polymer, with the result that the polymer composite where the phthalocyanine blue pigment is uniformly and minutely dispersed in the low density polyethylene pellet can be obtained.

**(Table 3)**

| Dispersion state of pigment-polymer composites | | | | |
|---|---|---|---|---|
| | Peripheral velocity (m/sec) | Stirring state | Number of grits | Risen Pressure Value (MPa) |
| Example 7 | 26 | Laminar flow | ○ | 1.0 |
| Example 8 | 68 | Laminar flow | ○ | 1.0 |
| Example 9 | 105 | Laminar flow | ○ | 0.7 |
| Example 10 | 130 | Laminar flow | ○ | 0.5 |
| Example 11 | 13 | Laminar flow | ○ | 1.0 |
| Example 12 | 78 | Laminar flow | ○ | 1.0 |
| Example 13 | 105 | Laminar flow | ○ | 1.2 |
| Control 4 | 210 | Turbulent flow | Δ | 4.3 |
| Control 5 | 240 | Turbulent flow | × | 6.2 |

An inflation film of 30 µm in thickness was prepared with respect to the individual samples. Then, grits which have appeared in the film of 10 mL capacity and which each shows a size of not less than 0.1 mm² are counted.
This grit is a grit which is formed with the phthalocyanine blue pigment in the polymer composite of a low density polyethylene pellet and phthalocyanine blue pigment.
The dispersibility of the phthalocyanine blue pigment was determined in accordance with the following evaluation criteria.

○ : The number of grits is less than 10 pieces/cm³, and the dispersion uniformity is in a sufficient level.

Δ: The number of grits is not less than 10 pieces/cm³ and less than 50 piece/cm³, and the dispersion uniformity is in a slightly inferior level and thus it might be improper for thin articles such as film in some cases.

×: The number of grits is 50 pieces/cm³ or more, and thus in many cases it is hardly said that the dispersion uniformity is in a good level.

### (Procedure of pressure rising test)

A wire net of 325 meshes was installed on the top end of uniaxial extruder having a screw diameter of 15mm. Pressure was allow to rise until a charged 1 kg sample of the polymer composite comprising a low density polyethylene pellet and phthalocyanine blue pigment was extruded, and the clogging state of the wire net was evaluated by the risen pressure value at the die part. If the dispersion uniformity is ensured, the risen pressure value should be low, because the composite can pass smoothly through the wire net without causing the clogging of the wire net. On the contrary, if the dispersion uniformity is in a lesser level and aggregates of the phthalocyanine blue pigment exists in the composite, the clogging of the wire net would be caused by the aggregates of the phthalocyanine blue pigment which function as huge particles, which brings meshes of the wire net an increased resistance, and thus, the risen pressure value should be high. As explained as above, by the value of the risen pressure, the dispersion uniformity can be determined.

### «Examples 8 - 12»

### <Manufacturing method>

Polymer composites being of low density polyethylene pellet - phthalocyanine blue pigment composites were prepared by stirring in accordance with the same procedure used in Example 1, except that the parameters shown in Table 3 were varied.

### <Evaluation of dispersion uniformity>

From the results shown in Table 3, it was found that the polymer composites, the risen pressure values of which were low as compared with those of Controls 4 and 5 mentioned later, and which also showed excellent level with respect to the number of grits under the above mentioned the evaluation criteria, and thus, in which the phthalocyanine blue pigment was uniformly and minutely dispersed in the low density polyethylene pellet, were obtained. It was found that when the peripheral velocity is in the range of 20 m/sec - 200 m/sec and the laminar flow could be formed, it is easy to provide the rejoining condition after the polymer was forced to lower the molecular weight thereof by subjecting at least a part of chemical bonds in the polymer, with the result that the polymer composite where the phthalocyanine blue pigment is uniformly and minutely dispersed in the low density polyethylene pellet can be obtained.

### «Example 13»

### <Manufacturing method>

100 parts of a low density polyethylene (manufactured by Ube Polyethylene Co., Ltd., F522N, pellets of 3 mm in diameter) having a MFR value of 5 g/10 minutes, and a softening temperature of 100.2 °C, and 40 parts of carbon black (specific surface area of 140m²/g, particle diameter of 19mm, and absorbed oil quantity of 114mL/100g)were stirred by using the mixer in Example 1 at a top end's peripheral velocity of 105 m/sec for 5 minutes at room temperature, in order to obtain a polymer composite.

### <Evaluation of dispersion uniformity>

From the results shown in Table 3, it was found that the polymer composites, the risen pressure values of which were low as compared with those of Controls 4 and 5 mentioned later, and which also showed excellent level with respect to the number of grits under the above mentioned the evaluation criteria, and thus, in which the carbon black pigment was uniformly and minutely dispersed in the low density polyethylene pellet, were obtained. It was found that when the peripheral velocity is in the range of 20 m/sec - 200 m/sec and the laminar flow could be formed, it is easy to provide the rejoining condition after the polymer was forced to lower the molecular weight thereof by subjecting at least a part of chemical bonds in the polymer, with the result that the polymer composite where the carbon black pigment is uniformly and minutely dispersed in the low density polyethylene pellet can be obtained.

### «Controls 4 and 5»

### <Manufacturing method>

Polymer composites being of low density polyethylene pellet - phthalocyanine blue pigment composites were prepared by stirring in accordance with the same procedure used in Example 7, except that the parameters shown in Table 3 were varied. When the top end's peripheral velocity exceeded 200 m/sec, the stirring came to the turbulent flow stirring.

### <Evaluation of dispersion uniformity>

From the results shown in Table 3, it was found that the polymer composites, the risen pressure values of which were higher than those of Examples 7 - 13, and which showed bad level with respect to the number of grits under the above mentioned the evaluation criteria, and, in which huge particles were unevenly dispersed, were obtained.

### «Example 14»

### <Manufacturing method>

100 parts of a polypropylene (manufactured by Idemitsu Petrochemical Co., Ltd., J2000GP, pellets of 3 mm in diameter) having a MFR value of 20 g/10 minutes (in accordance with JIS-K-7210), and a softening temperature of 159.9 °C (in accordance with JIS-K-7206), and 0.1 part of a phosphate ester's metal salt series nucleating agent(manufactured by ASAHI DENKA KOGYO Corp., trade name: ADK STAB NA-11) were added to the mixer used in Example 1 from the hopper intake opening thereof, and stirred at a top end' s peripheral velocity of 26 m/sec for 5 minutes at room temperature, in order to prepare a polymer composite being of polypropylene - phosphate ester's metal salt series nucleating agent composite.

### <Evaluation of crystallization initiating temperature and of dispersion uniformity>

The haze value and the crystallization initiating temperature of the polymer composite obtained in this Example were 59 and 127.7 °C, respectively. As compared with those of the pure polypropylene (86.8 and 114.7°C, respectively), this polymer composite showed a low turbidity, and further has an enhanced crystallization initiating temperature. It was considered that it was owing to the fact that the nucleating agent had dispersed with extreme uniformity and finely.

### «Example 15»

### <Manufacturing method>

100 parts of a polycarbonate (manufactured by Mitsubishi Engineering-Plastics Corp., Iupilon S-3000), and 5 parts of carbon nanotubes were added to the mixer used in Example 1, and stirred at a top end's peripheral velocity of 78 m/sec for 8 minutes at room temperature, in order to prepare a polymer composite being of polycarbonate - carbon nanotube composite.

### <Evaluation of volume electrical resistance and of dispersion uniformity>

The volume electrical resistance of the polymer composite obtained in this Example was 5.6 ×10² Ω · cm, and it was confirmed that the carbon nanotubes had been dispersed uniformly and minutely so as to own electrical continuity.

### «Example 16»

### <Manufacturing method>

80partsofapolycarbonate (manufactured by Mitsubishi Engineering-Plastics Corp., Iupilon S-3000), and 20 parts of polyamide (manufactured by Du Pont - Mitsui Polychemicals Co. , Ltd. , SELAR PA3426) were added to the mixer used in Example 1, and stirred at a top end's peripheral velocity of 92 m/sec for 4 minutes at room temperature, in order to prepare a polymer composite being of polycarbonate - polyamide.

### <Evaluation of transparency and of dispersion uniformity>

The haze value of the polymer composite was 5.4. As compared with those of the respective original polymer (Polycarbonate: 4.7, Polyamide:9.9), the transparency of the polymer composite became slightly lesser than that of polycarbonate. Owing to the uniform dispersibility, however, the compatibility of between the polycarbonate and the polyamide were brought to a good condition so as to repress the crystallization of the polyamide which would impair the transparency. Therefore, it was possible to provide a polymer alloy which was an almost perfect transparent polymer composite.
Thus, according to this procedure, it is possible to obtain the polymer composite of being polycarbonate - polyamide, in which the elasticmodulus derived frompolyamide is ensured, while the transparency derived from polycarbonate is also ensured.

### «Example 17»

### <Manufacturing method>

90partsofapolycarbonate (manufacturedbyMitsubishi Engineering-Plastics Corp., Iupilon S-3000), and 10 parts of no organification treatment received montmorillonite (manufactured by Sud Chemie: OPTIGEL CL) having a mean diameter of 11.7 µm were added to the mixer used in Example 1, and stirred at a top end's peripheral velocity of 124 m/sec for 9 minutes at room temperature, in order to prepare a polymer composite being of polycarbonate-montmorillonite composite.

### <Observation of the rejoining condition after the polymer was forced to lower the molecular weight thereof by subjecting at least a part of chemical bonds in the polymer>

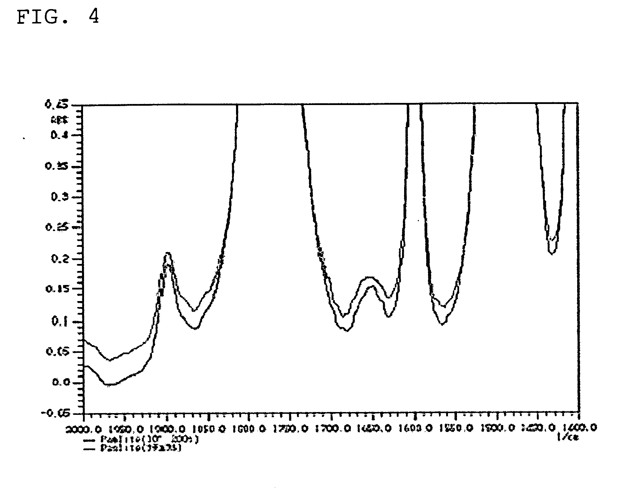

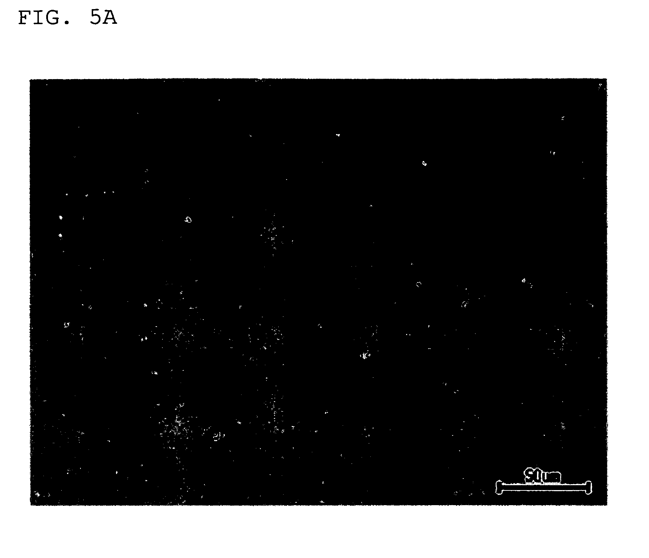

Changes in the molecular weight of the materials to be stirred between before and after stirring on the preparation of this polymer composite is shown in Table 1, and the results of the infrared spectra are shown in Fig. 4. Fig. 5A is an optical micrograph with 40 magnifications of a section of this polymer composite.

From the data of changes in the molecular weight of polymer(the number average molecular weight: Mn, and the weight average molecular weight: Mw) before and after the stirring by the GPC analysis of the materials to be stirred, it was found that variance of the molecular weight was within 20%, and thus it was understood that the molecular weight was hardly changed by this mixing. Therefore, it was understood that almost all the temporarily produced molecular weight lowered polymers had been rejoined.

As for the infrared rays spectra shown in Fig. 4, the absorption peaks of before and after stirrings were in close agreement with each other, and thus, it was confirmed that no structural change of the polymer were occurred between before and after the stirring.

As mentioned above, from Fig. 4 and Table 1, it can be confirmed that at least a part of chemical bonds in the polymer was cleaved so as to lower the molecular weight of the polymer and thereafter the cleaved ones were rejoined, and thus, it was able to be judged that the polymer composite manufacturing apparatus according to this Example and this embodiment was a polymer composite manufacturing apparatus capable of providing the rejoining condition after the polymer was forced to lower the molecular weight thereof by subj ecting at least a part of chemical bonds in the polymer.

### <Evaluation of dispersion uniformity and of repression effect for property deterioration >

From the data of changes in the molecular weight of polymer(the number average molecular weight: Mn, and the weight average molecular weight: Mw) before and after the stirring by the GPC analysis of the materials to be stirred, it was found that variance of the molecular weight was within 20%, and thus it was understood that the molecular weight was hardly changed by this mixing. Therefore, it was understood that almost all the temporarily produced molecular weight lowered polymers had been rejoined, and thus, it was understood that the deterioration of the polymer properties was able to be repressed.

As for the infrared rays spectra shown in Fig. 4, the absorption peaks of before and after stirrings were in close agreement with each other, and thus, it was confirmed that no structural change of the polymer were occurred between before and after the stirring. Therefore, it was understood that the deterioration of the polymer properties was able to be repressed.

According to the optical micrograph with 40 magnifications of a section of the polymer composite being of polycarbonate - montmorillonite composite shown in Fig. 5A, it was confirmed that the clay minerals, such as montmorillonite, which are ordinarily incompatible with polycarbonate, had been able to be dispersed with extreme uniformity and finely.

From these results, it was confirmed that in this manufacturing method it is possible to disperse with extreme uniformity and finely the clay minerals which is incompatible with polymer, without deteriorating the polymer.

### «Control 6»

### <Manufacturing method>

100 parts of a polypropylene (manufactured by Idemitsu Petrochemical Co. , Ltd., J2000GP, pellets of 3 mm in diameter) having a MFR value of 20 g/10 minutes and a softening temperature of 159.9 °C , and 0.1 part of a phosphate ester's metal salt series nucleating agent(manufactured by ASAHI DENKA KOGYO Corp., trade name: ADK STAB NA-11) were stirred at a top end's peripheral velocity of 144 m/sec for 2 minutes at 150 °C by using the mixer used in Example 1, and the stirring being turbulent flow stirring, in order to prepare a polymer composite being of polypropylene - phosphate ester's metal salt series nucleating agent composite.

### <Evaluation of crystallization initiating temperature and of dispersion uniformity>

The haze value and the crystallization initiating temperature of the polymer composite obtained in this Example were 91.3 and 115.2 °C, respectively. This polymer composite could not show transparency because of low dispersion uniformity, and no great complex effect of the nucleating agent was observed.

### «Control 7»

### <Manufacturing method>

Although the preparation of a polymer composite being of polycarbonate - carbon nanotube composite were tried as in Example 15 except that the stirring conditions were set to be a top end's peripheral velocity of 124 m/sec for 2 minutes at 150 °C and that the stirring was turbulent flow stirring, the carbon nanotubes were not complexed with the polycarbonate and were recovered in a state isolated from the polycarbonate. Because the turbulent flow was formed in spite of using a stirring temperature of not more than the softening temperature.

### «Control 8»

When the procedure of Example 16 was repeated except that the polymers were stirred at 200 °C, the each individual melted polymer was recovered separately, and thus the polymers were not complexed to the polymer composite being of polycarbonate - polyamide.

### «Control 9»

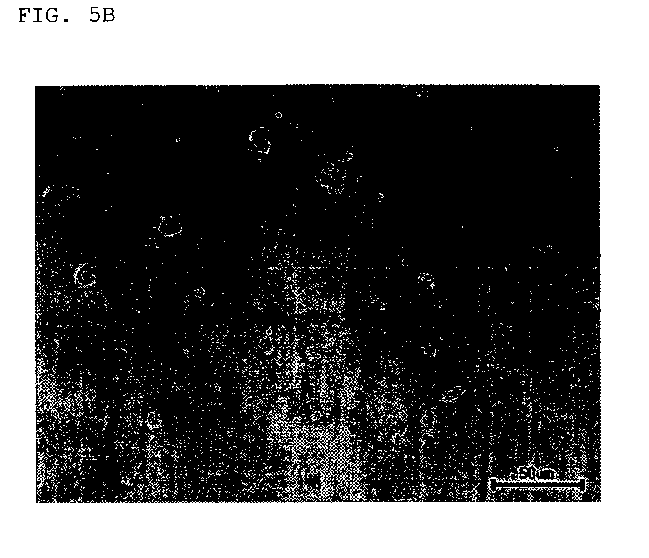

When the procedure of Example 17 was repeated except that the polycarbonate and the no organification treatment received montmorillonite were stirred at the top end's peripheral velocity of 19.6 m/sec , the obtained polymer composite showed a markedly opaque appearance.
From the optical micrograph with 40 magnifications of a section of the polymer composite (Fig. 5B), it was confirmed that the montmorillonite had hardly dispersed in the polymer with uniformity, and lumps of the montmorillonite dotted in the polymer.

## Claims

1. Method for manufacturing polymer composite in which a polymer as a dispersion medium and an additive to be added to the polymer is stirred for mixing in a cavity of a vessel to prepare a polymer composite in which the additive is dispersed in the polymer with a prescribed condition;
which method is **characterized in that** the stirring for mixing is performed under temperature conditions of not more than the softening temperature of the polymer until the additive is dispersed in the polymer with a prescribed condition, thereby the polymer is forced to lower the molecular weight thereof ephemerally by subjecting at least a part of chemical bonds in the polymer to cleavage, and thereafter the cleaved parts are rejoined.

2. The method for manufacturing polymer composite according to Claim 1,
wherein the polymer and the additive are stirred for mixing by a rotary mixing stirrer which rotates in the cavity,
the peripheral velocity at the top end of the rotary mixing stirrer is regulated within the range of not less than 20 m/sec and not more than 200 m/sec, and
the flow of the polymer composite in the cavity is maintained as a laminar flow.

3. The method for manufacturing polymer composite according to Claim 1, wherein the polymer composite is prepared within ten minutes from the starting time of the stirring for mixing.

4. The method for manufacturing polymer composite according to Claim 1, wherein the variance of the molecular weight of the polymer of before and after the mixing and stirring is within 20%.

5. The method for manufacturing polymer composite according to Claim 1, wherein substantially no structural change of the polymer is observed before and after the mixing and stirring.

6. The method for manufacturing polymer composite according to Claim 1, wherein radical species are present in the polymer composite of after starting the stirring for mixing, and the radical species disappear by the time the prescribed dispersion condition is accomplished.

7. The method for manufacturing polymer composite according to Claim 1, wherein as the additive at least one high molecular compound selected from inorganic materials and organic materials and at least one low molecular compound selected from inorganic materials and organic materials are used.

8. The method for manufacturing polymer composite according to one of Claims 1 - 7, wherein as the additive a carbonaceous substance including at least one kind of carbon blacks, carbon nanotubes, carbon nanohorns, and fullerene is used.

9. The method for manufacturing polymer composite according to Claim 1, wherein the cleaved chemical bonds belong to the main chain of the polymer.

10. The method for manufacturing polymer composite according to Claim 1, wherein as the cavity a barrel or cylindrical inner space is used.

11. The method for manufacturing polymer composite according to Claim 1, wherein the rotary mixing stirrer has a shape of impeller blade.
